# EUROPÄISCHE PATENTANMELDUNG

(11) **EP 2 662 513 A1**
(43) Veröffentlichungstag der Anmeldung: **13.11.2013**
(21) Anmeldenummer: 12167174.7
(22) Anmeldetag: 08.05.2012
(51) Int. Cl.: E04H 15/32, E04H 15/44, B62B 1/12, B62B 1/14

(54) **Fahrelement, insbesondere Fahrelement für ein Zeltsystem, sowie Zeltsystem**

(71) Anmelder: Expotrade Group GmbH, 6842 Koblach (AT)
(72) Erfinder: Schnetzer, Andreas, 6835 Muntlix (AT)
(74) Vertreter: Rupprecht, Kay

(57) **Zusammenfassung**

Die vorliegende Erfindung betrifft ein Fahrelement (10), insbesondere Fahrelement (10) für ein Zeltsystem, mit wenigstens einem ersten Rad (20) und mit wenigstens einem zweiten Rad (30), mit wenigstens einem Verbindungselement (40), mittels dessen das erste Rad (20) und das zweite Rad (30) mittelbar und/oder unmittelbar verbunden sind, und mit wenigstens einem Aufnahmeelement (50, 50'), das derart beschaffen ist, dass mittels des Aufnahmeelements (50, 50') zumindest ein Bodenelement eines zusammenklappbaren Zeltsystems zumindest teilweise aufnehmbar ist. Des Weiteren betrifft die vorliegende Erfindung ein Zeltsystem bestehend aus einem zumindest teilweise zusammenklappbaren Zelt und wenigstens einem Fahrelement.

## Beschreibung

Die vorliegende Erfindung betrifft Fahrelement, insbesondere ein Fahrelement für ein Zeltsystem, sowie ein Zeltsystem bestehend aus einem zumindest teilweise zusammenklappbaren Zelt und wenigstens einem Fahrelement.

Im Zusammenhang mit Freiluftveranstaltungen, Messen, größeren Sportveranstaltungen, Wanderausstellungen oder dergleichen werden Zeltsysteme eingesetzt, die Zelte umfassen bzw. aufweisen, die zusammengeklappt werden können. Diese zusammenklappbaren Zelte können in der Regel mit wenigen Handgriffen errichtet werden, aber auch mit wenigen Handgriffen erneut zusammengelegt werden. Um den Transport dieser zusammenklappbaren Zelte zu erleichtern, weisen diese Zeltsysteme in der Regel Zelttaschen auf, die mit Rollen versehen sind. In diesem Zusammenhang ist es aber ebenfalls bereits bekannt, die Füße der Zeltsysteme, die regelmäßig plattenartig ausgebildet sind, mit aufschiebbaren Rollen zu versehen, so dass das Zelt im zusammengeklappten Zustand verfahren bzw. geschoben werden kann.

Die bislang bekannten Systeme sehen dabei vor, dass jeder einzelne Fuß eines derartigen Zeltes mit einem Rollenelement zu versehen ist. Dies erhöht die Anzahl der Teile des Zeltsystems und erhöht die Gefahr, dass Teile des Zeltsystems verloren gehen. Auch der Einsatz von mit Rollen versehenen Zelttaschen ist mit Nachteilen behaftet, da beispielsweise bei derartigen Taschen die unter hohen Belastungen ausgesetzten Rollen nicht ohne Weiteres ausgetauscht werden können.

Es ist daher die Aufgabe der vorliegenden Erfindung, ein Fahrelement für ein Zeltsystem der eingangs genannten Art in vorteilhafter Weise weiterzubilden, insbesondere dahingehend, dass ein derartiges Fahrelement einerseits einfach aufgebaut und zugleich andererseits dem Einsatzzweck entsprechend einfach handhabbar ist.

Diese Aufgabe wird erfindungsgemäß gelöst durch ein Fahrelement mit den Merkmalen des Anspruchs 1. Danach ist vorgesehen, dass ein Fahrelement mit wenigstens einem ersten Rad und mit wenigstens einem zweiten Rad, mit wenigstens einem Verbindungselement, mittels dessen das erste Rad und das zweite Rad mittelbar und/oder unmittelbar verbunden sind, und mit wenigstens einem Aufnahmeelement bereitgestellt wird, das derart beschaffen ist, dass mittels des Aufnahmeelements zumindest ein Bodenelement eines zusammenklappbaren Zeltsystems zumindest teilweise aufnehmbar ist.

Dadurch ergibt sich insbesondere der Vorteil, Fahrelement einerseits einfach aufgebaut und zugleich andererseits dem Einsatzzweck entsprechend einfach handhabbar ist.

Der Begriff Rad ist im Zusammenhang mit der Erfindung nicht einschränkend zu verstehen. Insbesondere umfasst der Begriff Rad beispielsweise auch Rollen oder sonstige drehbar abrollbare Elemente, mittels derer das Fahrelement verfahren werden kann.

Insbesondere kann das Fahrelement ein Fahrelement für ein Zeltsystem, beispielsweise für ein Zeltsystem aus dem Veranstaltungsbereich sein. Derartige Zeltsysteme zeichnen sich dadurch aus, dass sie ein Zelt bestehend aus Plane und Gestänge sowie z.B. eine Zelttasche zur Aufnahme des zusammengefalteten Zeltes aufweisen. Zu dem Zeltsystem kann das Fahrelement gehören.

Das Zelt selbst kann mit wenigen Handgriffen aufgebaut bzw. zusammengefaltet werden. Derartige Zeltsysteme kommen insbesondere bei größeren Freiluftveranstaltungen wie Sportveranstaltungen bzw. Turnieren, Freiluftmessen, Verkaufsveranstaltungen, Catering-Zelten usw. zum Einsatz. Diese Zelte sind beispielsweise derart ausgestaltet, dass sie eine Grundfläche von mehreren Quadratmetern überdecken können, z.B. 3-36 m² Grundfläche. Üblicherweise weisen diese Zelte z.B. vier Eckstangen auf, an deren bodenseitigem Ende, also den Füßen des Zeltes, jeweils wenigstens ein Bodenelement vorgesehen ist. Ein derartiges Bodenelement kann z.B. ein Plattenelement sein, das im aufgestellten Zustand des Zeltes auf dem Boden bzw. der Aufstellfläche aufliegt. Es ist denkbar, dass ein derartiges Bodenelement ein oder mehrere Lochungen oder dergleichen aufweist, durch die z.B. ein Hering oder ein Bolzen zur verbesserten Befestigung und Sicherung des Zeltes hindurch getrieben werden kann.

Mittels des Fahrelementes ist es vorteilhaft möglich, ein zusammengeklapptes Zelt mittels z.B. eines oder mehrerer Bodenelemente sicher in dem bzw. mit dem Aufnahmeelement aufzunehmen und sodann vergleichsweise einfach verfahren zu können. Denkbar ist beispielsweise, das in das Fahrelement eingesetzte Zelt um die Drehachse der beiden Räder des Fahrelementes zu verschwenken und sodann das Zeltsystem insgesamt zu schieben. Die Zeltsystem schiebende bzw. verfahrende Person kann dies beispielsweise dadurch bewerkstelligen, dass die Zelttasche bzw. das zusammengefaltete Zelt, das in das Fahrelement eingesetzt ist, gegriffen wird. Im Unterschied beispielsweise zu einer Sackkarre muss das Fahrelement somit keine gesonderten Griffelemente aufweisen, wodurch kompakte Abmessungen des Fahrelementes ermöglicht werden.

Des Weiteren kann vorgesehen sein, dass das Verbindungselement eine Verbindungsstange ist. Durch eine Verbindungsstange kann eine besonders einfache und zuverlässige Verbindung der beiden Räder hergestellt werden. Als Verbindungsstange ist beispielsweise ein Verbindungsrohr oder auch eine Stange, welche rund, mehrkantig oder vielkantig sein kann sowie ein Profil aufweisen bzw. aus verschiedenen Materialien bestehen kann, die zumindest teilweise aus Vollmaterial besteht, möglich. Denkbar ist, dass die Verbindungstange an ihren beiden Enden jeweils die Lager der beiden Räder des Fahrelementes aufnimmt. Es ist auch möglich, dass die Verbindungsstange als Rohr ausgeführt ist und die beiden Räder auf eine gemeinsame Radachse montiert sind. Eine derartige Radachse kann z.B. in der Verbindungsstange zumindest teilweise geführt sein.

Es ist ferner möglich, dass die Verbindungsstange verkürzbar und/oder verlängerbar ist. Dadurch wird es möglich, den Abstand der beiden Räder individuell und bedarfsgerecht einstellen zu können. Hierdurch ergibt sich der Vorteil, dass auch zusammengelegte Zelte mit unterschiedlichen Abmessungen mit demselben Fahrelement verfahren werden können.

Insbesondere ist vorteilhaft denkbar, dass die Verbindungsstange teleskopierbar ist.

Außerdem kann vorgesehen sein, dass das Aufnahmeelement zumindest teilweise mittelbar und/oder unmittelbar an dem Verbindungselement befestigt ist.

Ferner ist denkbar, dass das Aufnahmeelement einen Bodenabschnitt aufweist, auf den das Bodenelement des zusammenklappbaren Zeltsystems aufstellbar und/oder aufschiebbar ist. Das Aufnahmeelement kann beispielsweise einen Bodenabschnitt aufweisen, der im Wesentlichen den Abmessungen des Bodenelementes des zusammenklappbaren Zeltsystems bzw. Zeltes entspricht. Bei einer derartigen vorteilhaften Ausführungsform liegt z.B. die Unterseite des Bodenelementes des Zeltes auf der Oberseite des Bodenelementes auf. Das Fahrelement und das zusammengelegte Zelt können somit vorteilhaft und sicher zusammengefügt werden, da eine ausreichend große Auflagefläche für die Bodenelemente des Zeltes besteht.

Des Weiteren ist es möglich, dass das Aufnahmeelement wenigstens einen U-förmigen Wandungsabschnitt aufweist. Der Wandungsabschnitt kann beispielsweise im Randbereich des Bodenabschnittes des Fahrelementes, vorzugsweise im dem Verbindungselement zugewandten Randbereich des Bodenabschnittes des Fahrelementes angeordnet sein. Der U-förmige Wandungsabschnitt kann sich ganz oder auch nur teilweise über die Länge einer Seite des Bodenabschnittes des Fahrelementes erstrecken.

Insbesondere kann vorgesehen sein, dass der U-förmige Wandungsabschnitt derart bemessen und/oder beschaffen ist, dass er zumindest ein Bodenelement eines zusammenklappbaren Zeltsystems umgreift oder umgreifen bzw. untergreifen kann.

Es ist ferner denkbar, dass das Aufnahmeelement wenigstens einen abgewinkelten Wandungsabschnitt aufweist. Beispielsweise kann vorgesehen sein, dass der wenigstens eine abgewinkelte Wandungsabschnitt, welcher auch als L-Profil ausgeführt sein kann, an der Seite des Bodenabschnittes des Fahrelementes befindet, der einem Rad auf dieser Seite des Fahrelementes zugewandt ist. Der abgewinkelte Wandungsabschnitt kann somit zur Stabilisierung bzw. seitlichen Stabilisierung des Bodenelementes des Zeltes dienen, da der abgewinkelte Wandungsabschnitt vorteilhafterweise derart beschaffen sein kann, dass er ein seitliches Herunterrutschen des Bodenelementes von dem Bodenabschnitt verhindert.

Darüber hinaus kann vorgesehen sein, dass wenigstens zwei Aufnahmeelemente vorgesehen sind.

Es ist ferner vorteilhaft möglich, dass die wenigstens zwei Aufnahmeelemente derart an dem Verbindungselement befestigt sind, dass die wenigstens zwei Aufnahmeelemente im Wesentlichen in einer Ebene angeordnet sind, wobei insbesondere die Bodenabschnitte der wenigstens zwei Aufnahmeelemente im Wesentlichen in einer Ebene angeordnet sind.

Außerdem kann vorgesehen sein, dass die wenigstens zwei Aufnahmeelemente im Wesentlichen spiegelsymmetrisch ausgebildet sind. Denkbar ist in diesem Zusammenhang, dass beispielsweise die beiden Aufnahmeelemente jeweils benachbart zu jeweils einem der beiden Räder angeordnet sind.

Des Weiteren betrifft die vorliegende Erfindung ein Zeltsystem mit den Merkmalen des Anspruchs 13. Danach ist vorgesehen, dass ein Zeltsystem aus wenigstens einem zumindest teilweise zusammenklappbaren Zelt und wenigstens einem Fahrelement nach einem der vorhergehenden Ansprüche 1 bis 11 besteht.

Das Zeltsystem kann insbesondere ein vorstehend beschriebenes Zeltsystem aus dem Veranstaltungsbereich sein.

Es ist ferner möglich, dass das Zelt wenigstens ein Bodenelement aufweist, das derart beschaffen ist, dass es zumindest teilweise durch das Aufnahmeelement aufnehmbar ist.

Des Weiteren ist denkbar, dass das Zelt wenigstens zwei Bodenelemente aufweist, insbesondere vier Bodenelemente oder mehr aufweist, wobei das erste Bodenelement durch ein erstes Aufnahmeelement aufnehmbar ist und wobei das zweite Bodenelement durch ein zweites Aufnahmeelement aufnehmbar ist.

Weitere Einzelheiten und Vorteile der Erfindung sollen nun anhand eines in den Zeichnungen dargestellten Ausführungsbeispiels näher erläutert werden. Es zeigen:
- Figur 1:: eine Draufsicht auf ein erfindungsgemäßes Fahrelement für ein erfindungsgemäßes Zeltsystem;
- Figur 2:: eine perspektivische Ansicht auf das in Figur 1 gezeigte Fahrelement.

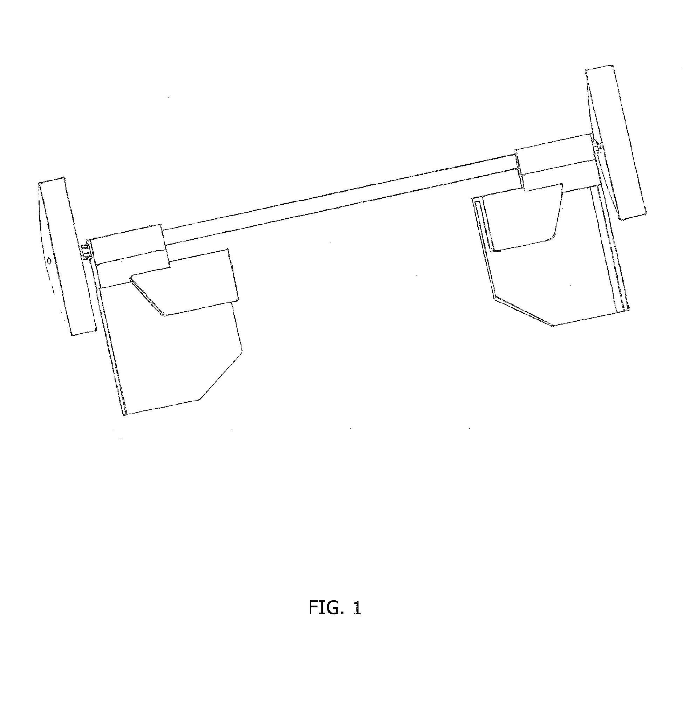

Figur 1 zeigt in der Draufsicht ein Fahrelement 10 für ein nicht näher dargestelltes Zeltsystem. Dabei weist das Fahrelement 10 ein erstes Rad 20 und zweites Rad 30 auf, die mittels eines als Verbindungsstange 40 ausgeführten Verbindungselementes 40 miteinander verbunden sind.

In der in Figur 1 dargestellten Ausführungsform ist die Verbindungsstange 40 hinsichtlich der Länge nicht verstellbar ausgeführt. Es ist jedoch grundsätzlich denkbar und möglich, dass die Verbindungsstange 40 verkürzbar und/oder verlängerbar ist. Insbesondere kann vorgesehen sein, dass eine teleskopierbare Verbindungsstange 40 eingesetzt werden kann, die eine entsprechende Einstellung je nach Bedarf des Abstandes der beiden Räder 20, 30 des Fahrelements 10 erlaubt.

An der Verbindungsstange 40, an der die Räder 20, 30 drehbar angelenkt sind, sind zwei Aufnahmeelemente 50, 50' befestigt. Die beiden Aufnahmeelemente 50, 50' dienen zur Aufnahme der Bodenelemente eines zusammenklappbaren Zeltsystems, wobei die Bodenelemente des zusammenklappbaren Zeltsystems vorzugsweise zwei plattenartige Füße des Zeltsystems sind. So kann insbesondere vorgesehen sein, dass beispielsweise bei einem Zelt mit vier derartigen Füßen zwei plattenartige Füße durch die Aufnahmeelemente 50, 50' aufgenommen werden können. Die Aufnahmeelemente 50, 50' sind starr mittels Befestigungsabschnitten 55, 55' an der Verbindungsstange 40 befestigt, so dass die Bodenabschnitte 51, 51' der Aufnahmeelemente 50, 50' sich stets im Wesentlichen in einer Ebene befinden.

Auf die Bodenabschnitte 51, 51' können die zwei Bodenelemente eines zusammenklappbaren Zeltsystems aufgestellt bzw. aufgeschoben werden. Um das Aufschieben zu erleichtern sind die Bodenabschnitte 51, 51' mit einer Abschrägung 56, 56' versehen. Auch ist denkbar, dass die Bodenabschnitte 51, 51' zusätzlich an der Kante 57, 57', über die Bodenelemente des Zeltes auf die Bodenabschnitte 51, 51' aufgeschoben werden können, eine geringere Materialstärke aufweisen, als beispielsweise in dem Bereich der Bodenabschnitte 51, 51', die der Verbindungsstange 40 zugewandt ist.

Die Aufnahmeelemente 50, 50' weisen in dem der Verbindungsstange 40 zugewandten Bereich einen U-förmigen Wandungsabschnitt 52, 52' auf, der derart bemessen bzw. beschaffen ist, dass er das Bodenelement des Zeltes jeweils entsprechend umgreift bzw. umgreifen kann, so dass das Bodenelement sowohl nach oben, als auch nach unten geführt ist. Es ist erwünscht, dass der U-förmige Wandungsabschnitt derart bemessen ist, dass der Abstand der beiden Schenkel des U-förmigen Wandungsabschnittes einen derartigen Abstand aufweist, dass das plattenartige Bodenelement des zusammenklappbaren Zeltsystems klemmend bzw. leicht klemmend gehalten werden kann.

Zur seitlichen Führung der Bodenelemente des zusammengeklappten Zeltsystems sind ferner bei den Aufnahmeelementen 50, 50' abgewinkelte Wandungsabschnitte 54, 54' vorgesehen.

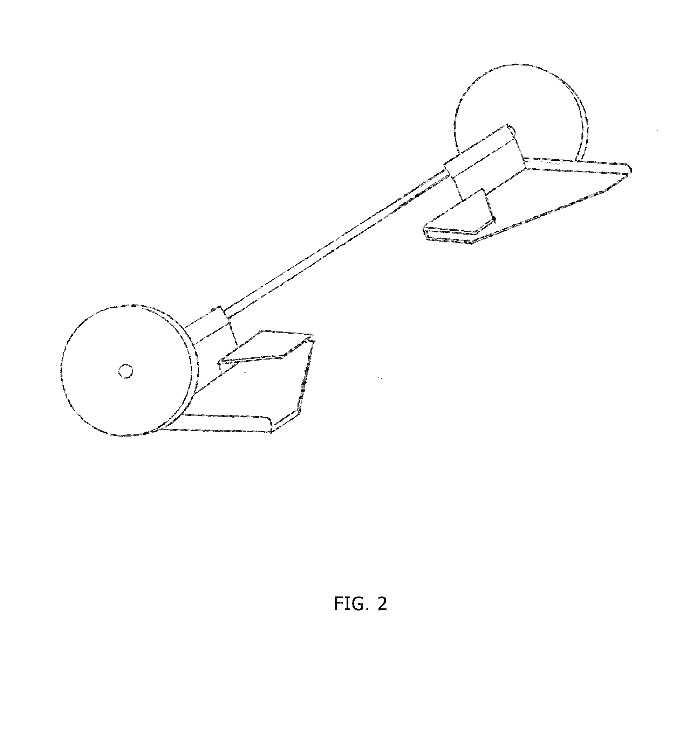

Figur 2 zeigt das in Figur 1 gezeigte Fahrelement 10 nochmals in einer perspektivischen Darstellung. Auf das Fahrelement 10 kann somit ein zusammengeklapptes Zelt eines Zeltsystems bestehend aus einem derartigen zusammenklappbaren Zelt und wenigstens einem Fahrelement, wie es in Figur 1 und 2 gezeigt ist, aufgeschoben werden. Denkbar ist beispielsweise, dass das Zelt im zusammengeklappten Zustand einen im Wesentlichen quaderförmigen Umriss hat bzw. eine im Wesentlichen quaderförmige Kontur hat, wobei die Bodenelemente bzw. Füße des Zeltsystems (gedanklich) eine Fläche bzw. Aufstellfläche des quaderförmigen Umrisses bzw. der quaderförmigen Kontur des zusammengeklappten Zeltes beschreiben. Sodann können zwei Bodenelemente auf die Aufnahmeelemente 50, 50' des Fahrelements 10 aufgesetzt bzw. aufgeschoben werden, um sodann das gesamte Zeltsystem auf dem Fahrelement 10 verfahren zu können.

### Bezugszeichenliste

- 10: Fahrelement
- 20: Rad
- 30: Rad
- 40: Verbindungselement; Verbindungsstange
- 50: Aufnahmeelement
- 50': Aufnahmeelement
- 51: Bodenabschnitt
- 51': Bodenabschnitt
- 52: U-förmiger Wandungsabschnitt
- 52': U-förmiger Wandungsabschnitt
- 54: abgewinkelter Wandungsabschnitt
- 54': abgewinkelter Wandungsabschnitt
- 55: Befestigungsabschnitt
- 55': Befestigungsabschnitt
- 56: Abschrägung
- 56': Abschrägung
- 57: Kante
- 57': Kante

## Patentansprüche

1. Fahrelement (10), insbesondere Fahrelement (10) für ein Zeltsystem, mit wenigstens einem ersten Rad (20) und mit wenigstens einem zweiten Rad (30), mit wenigstens einem Verbindungselement (40), mittels dessen das erste Rad (20) und das zweite Rad (30) mittelbar und/oder unmittelbar verbunden sind, und mit wenigstens einem Aufnahmeelement (50, 50'), das derart beschaffen ist, dass mittels des Aufnahmeelements (50, 50') zumindest ein Bodenelement eines zusammenklappbaren Zeltsystems zumindest teilweise aufnehmbar ist.

2. Fahrelement (10) nach Anspruch 1,
**dadurch gekennzeichnet, dass**
das Verbindungselement (40) eine Verbindungsstange (40) ist.

3. Fahrelement (10) nach Anspruch 2,
**dadurch gekennzeichnet, dass**
die Verbindungsstange (40) verkürzbar und/oder verlängerbar ist.

4. Fahrelement (10) nach Anspruch 3,
**dadurch gekennzeichnet,dass**
die Verbindungsstange (40) teleskopierbar ist.

5. Fahrelement (10) nach einem der vorhergehenden Ansprüche,
**dadurch gekennzeichnet, dass**
das Aufnahmeelement (50, 50') zumindest teilweise mittelbar und/oder unmittelbar an dem Verbindungselement (40) befestigt ist.

6. Fahrelement (10) nach einem der vorhergehenden Ansprüche,
**dadurch gekennzeichnet, dass**
das Aufnahmeelement (50, 50') einen Bodenabschnitt (51, 51') aufweist, auf den das Bodenelement des zusammenklappbaren Zeltsystems aufstellbar und/oder aufschiebbar ist.

7. Fahrelement (10) nach einem der vorhergehenden Ansprüche,
**dadurch gekennzeichnet, dass**
das Aufnahmeelement (50, 50') wenigstens einen U-förmigen Wandungsabschnitt (52, 52') aufweist.

8. Fahrelement (10) nach Anspruch 7,
**dadurch gekennzeichnet, dass**
der U-förmige Wandungsabschnitt (52, 52') derart bemessen und/oder beschaffen ist, dass er zumindest ein Bodenelement eines zusammenklappbaren Zeltsystems umgreift oder umgreifen bzw. untergreifen kann.

9. Fahrelement (10) nach einem der vorhergehenden Ansprüche,
**dadurch gekennzeichnet, dass**
das Aufnahmeelement (50, 50') wenigstens einen abgewinkelten Wandungsabschnitt (54, 54') aufweist.

10. Fahrelement (10) nach einem der vorhergehenden Ansprüche,
**dadurch gekennzeichnet, dass** wenigstens zwei Aufnahmeelemente (50, 50') vorgesehen sind.

11. Fahrelement (10) nach Anspruch 10,
**dadurch gekennzeichnet, dass**
die wenigstens zwei Aufnahmeelemente (50, 50') derart an dem Verbindungselement (40) befestigt sind, dass die wenigstens zwei Aufnahmeelemente (50, 50') im Wesentlichen in einer Ebene angeordnet sind, wobei insbesondere die Bodenabschnitte (51, 51') der wenigstens zwei Aufnahmeelemente (50, 50') im Wesentlichen in einer Ebene angeordnet sind.

12. Fahrelement (10) nach Anspruch 10 oder 11,
**dadurch gekennzeichnet, dass**
die wenigstens zwei Aufnahmeelemente (50, 50') im Wesentlichen spiegelsymmetrisch ausgebildet sind.

13. Zeltsystem bestehend aus wenigstens einem zumindest teilweise zusammenklappbaren Zelt und wenigstens einem Fahrelement (10) nach einem der vorhergehenden Ansprüche.

14. Zeltsystem nach Anspruch 13,
**dadurch gekennzeichnet, dass**
das Zelt wenigstens ein Bodenelement aufweist, das derart beschaffen ist, dass es zumindest teilweise durch das Aufnahmeelement (50, 50') aufnehmbar ist.

15. Zeltsystem nach Anspruch 13 oder 14,
**dadurch gekennzeichnet, dass**
das Zelt wenigstens zwei Bodenelemente aufweist, insbesondere vier Bodenelemente oder mehr aufweist, wobei das erste Bodenelement durch ein erstes Aufnahmeelement (50) aufnehmbar ist und wobei das zweite Bodenelement durch ein zweites Aufnahmeelement (50') aufnehmbar ist.
